# EUROPEAN PATENT SPECIFICATION

(11) **EP 2 492 989 B1**
(45) Date of publication and mention of the grant of the patent: **16.10.2013**
(21) Application number: 11177915.3
(22) Date of filing: 18.08.2011
(51) Int. Cl.: H01M 2/02, H01M 10/04, H01M 10/42

(54) **Pouch type battery and method of manufacturing the same**
Beutelartige Batterie und Herstellungsverfahren dafür
Batterie de type à sachet et son procédé de fabrication

(30) Priority: 24.02.2011 US 446413 P; 02.08.2011 US 201113196745
(43) Date of publication of application: 29.08.2012
(73) Proprietor: Samsung SDI Co., Ltd., Yongin-si, Gyeonggi-do (KR)
(72) Inventor: Hong, Kisung, Gyeonggi-do (KR); Kim, Younghoon, Gyeonggi-do (KR)
(74) Representative: Walaski, Jan Filip

(56) References cited:
- JP-A- 2002 025 514
- JP-A- 2008 041 494
- US-A1- 2005 142 439

## Description

The present invention relates to a pouch type battery and a method of manufacturing the pouch type battery.

In a pouch type battery, a separator is disposed between positive and negative electrode plates as an ion transfer medium (that is, electrolyte) and a separating member like in a lithium ion battery (hereinafter, an assembly of a positive electrode plate, a negative electrode plate, and a separator will be referred to as an electrode assembly). Such a separator is formed of a gel type polymer electrolyte. For example, a separator may be formed by impregnating a polymer with electrolyte to improve ion conductivity.

A pouch type battery may include a flexible pouch shape. In such a pouch type battery, an electrode assembly formed by stacking a positive electrode, a separator, and a negative electrode may be disposed in a pouch, or an electrode assembly formed by stacking and winding a positive electrode, a separator, and a negative electrode may be disposed in a pouch. Edges of upper and lower films of the pouch are thermally bonded. The pouch is generally formed of a multilayer film including a metal foil layer and a synthetic resin layer (polymer layer) covering the metal foil layer. The metal foil layer is generally formed of aluminum. The polymer layer forming an inner layer of the pouch protects the metal foil layer from electrolyte. The polymer film also prevents a short circuit among the positive electrode, the negative electrode, and electrode tabs. If edges of the pouch are not insulated, the metal foil layer (middle layer) of the pouch may be exposed. In this case, a short circuit may occur between the exposed metal foil layer and a conductor of an external device.

A conventional pouch type battery has been disclosed by JP 2002025514.

According to the invention, there is provided a pouch type battery comprising an electrode assembly, a pouch surrounding the electrode assembly and an insulating tape disposed along a longitudinal edge of the pouch and extending along first and second adjacent surfaces of the pouch, the pouch having a first recess that runs along the length of the first surface of the pouch to receive the insulating tape.

The pouch may include a first portion that forms a first side surface of the pouch and a wing that is folded back against the first portion to form an outer side surface of the pouch, wherein the insulating tape is disposed along the outer side surface of the pouch.

The length of the folded back portion may be the same as or less than the height of the first side surface.

The first recess may comprise first and second stepped portions at both sides of the battery for receiving first and second insulating tapes.

The pouch type battery may further comprise a second recess that runs along the length of the third surface of the pouch opposite the first surface, wherein the insulating tape is arranged to be received in both the first and second recesses.

The first and second recesses may comprise first and second stepped portions at both sides of the battery for receiving first and second insulating tapes. The width of the first and second stepped portions at the first and third surfaces of the battery may be the same such that the first and second insulating tapes are symmetrically disposed.

The pouch may comprise a metal thin film layer between first and second insulation layers, wherein the insulating tape covers the metal thin film layer exposed at an edge of the pouch.

The pouch may comprise an upper outer member that comprises a space for receiving the electrode assembly, the upper outer member being bonded to a lower outer member.

The pouch type battery may further comprise a protective circuit module arranged within the perimeter formed by the outer member.

According to the invention, there is provided a method of manufacturing a pouch type battery comprising forming an outer member around an electrode assembly such that the outer member forms a housing that conforms to the shape of the electrode assembly and extension portions extending from the housing and forming a first recess along the length of the first surface of the housing to receive an insulating tape.

The method may further comprise folding the extension portions towards the housing to form a pouch and affixing the insulating tape in the first recess and along a side of the pouch to cover the exposed end of the folded extension portions.

The method may comprise folding the extension portions towards the housing before or after forming the first recess.

Recesses may be formed on either side of the first surface of the housing to receive first and second insulating tapes. The method may comprise forming second recesses on both sides of a third surface of the housing opposite the first surface; and affixing first and second insulating tapes on both sides of the housing to cover the side surfaces of the housing and edge portions of the first and third surfaces of the housing.

Embodiments of the invention will now be described by way of example, with reference to the accompanying drawings, in which:
FIG. 1 is a perspective view illustrating a pouch type battery according to an embodiment;
FIG. 2 is a sectional view of the pouch type battery taken along line I-I' of Fig. 1;
FIG. 3 is an enlarged sectional view illustrating portion (3) of FIG. 2;
FIG. 4 is a perspective view illustrating a sealed outer member of the pouch type battery illustrated in FIG. 1;
FIG. 5 is a perspective view illustrating a folded state of remaining parts of the sealed outer member of the pouch type battery illustrated in FIG. 4;
FIG. 6 is a flowchart for explaining a method of manufacturing a pouch type battery according to an embodiment;
FIG. 7 is a sectional view illustrating a pouch type battery according to another embodiment; and
FIG. 8 is an enlarged sectional view illustrating portion (8) of FIG. 7.

First, a pouch type battery will be described according to an embodiment.

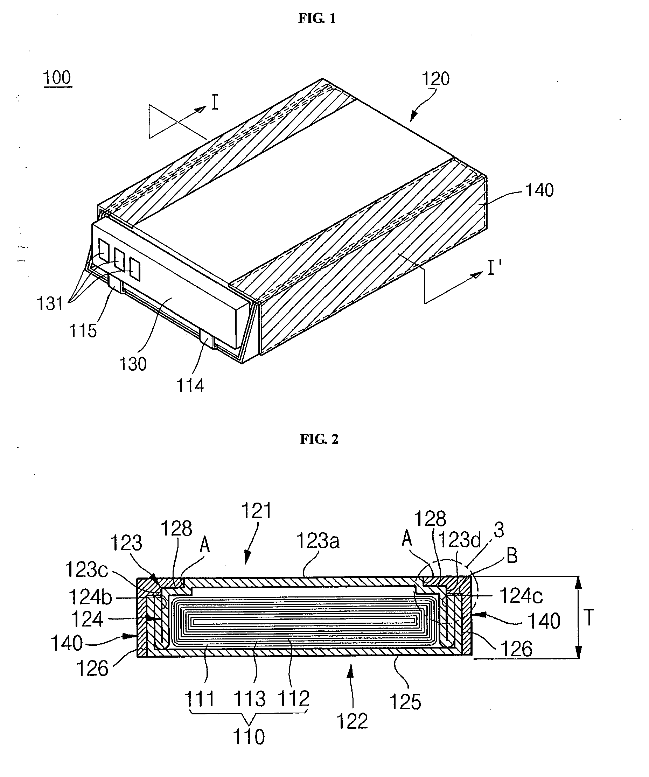

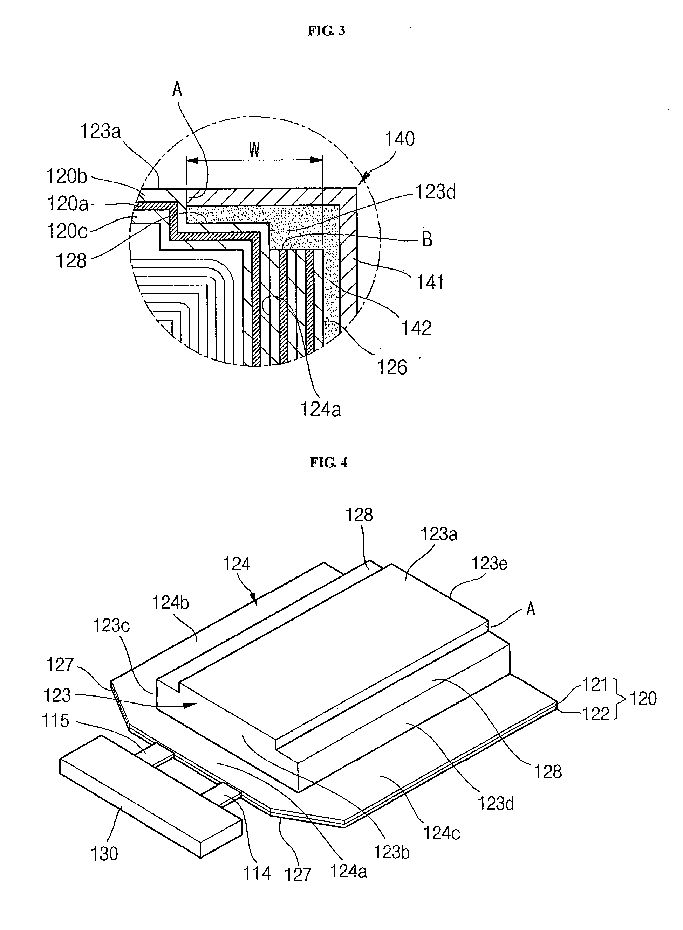

As shown in FIGS. 1 through 5, the pouch type battery 100 of the current embodiment includes an electrode assembly 110, an outer member 120 that forms a pouch, a protective circuit module 130, and insulation tapes 140.

The outer member 120 of the pouch type battery 100 is sealed and upper and lower remaining parts 124, 126 of the outer member 120, also referred to as wings, are folded. The insulation tapes 140 are attached to edge parts (B) of the folded outer member 120. For attaching the insulation tapes 140 to the edge parts (B), the edge parts (B) are pressed to defined recesses having a depth corresponding to the thickness of the insulation tapes 140. Since the insulation tapes 140 are attached to the pressed edge parts (B), a thickness (T) of the pouch type battery 100 is not increased.

The electrode assembly 110 includes a positive electrode plate 111, a separator 113, and a negative electrode plate 112 that are sequentially stacked or wound after being sequentially stacked. A positive electrode tab 114 is connected to the positive electrode plate 111 and extends outward from the positive electrode plate 111 by a predetermined length, and a negative electrode tab 115 is connected to the negative electrode plate 112 and extends outward from the negative electrode plate 112 by a predetermined length.

The positive electrode plate 111 may be formed by coating aluminum foil or mesh with a lithium cobalt oxide (positive electrode active material). The negative electrode plate 112 may be formed by coating copper foil with graphite (negative electrode active material). The separator 113 may be formed of a gel type polymer electrolyte. However, the separator 113 is not limited to the gel type polymer electrolyte. In addition, the current embodiment is not limited to the positive electrode plate 111, the positive electrode active material, the negative electrode plate 112, and the negative electrode active material.

The positive electrode tab 114 is formed of aluminum and is connected to a non-coating (uncoated) portion of the positive electrode plate 111. The positive electrode tab 114 protrudes from a side of the outer member 120. The negative electrode tab 115 is formed of copper and is connected to a non-coating portion of the negative electrode plate 112. The negative electrode tab 115 protrudes from a side of the outer member 120. However, the current embodiment is not limited to the above-listed materials.

The outer member 120 includes a plurality of layers. The outer member 120 includes a metal thin film 120a and insulation layers 120b and 120c formed on both sides of the metal thin film 120a.

The metal thin film 120a may be formed of steel, stainless steel, aluminum, or an equivalent thereof. However, the material of the metal thin film 120a is not limited to the above-mentioned materials.

The insulation layers 120b and 120c include an outer insulation layer 120b and an inner insulation layer 120c.

The outer insulation layer 120b forms an outer surface of the outer member 120. The outer insulation layer 120b may be formed of one of nylon, polyethylene terephthalate (PET), and an equivalent thereof. However, the material of the outer insulation layer 120b is not limited to the above-mentioned materials.

The inner insulation layer 120c forms an inner surface of the outer member 120.

The inner insulation layer 120c may be formed of one of chlorinated polypropylene (CPP) and an equivalent thereof. However, the material of the inner insulation layer 120c is not limited to the above-mentioned materials.

The outer member 120 includes an upper outer member 121 and a lower outer member 122. Edges of the upper outer member 121 and the lower outer member 122 are bonded together, and the other edges of the upper outer member 121 and the lower outer member 122 are not bonded so that the electrode assembly 110 can be received.

The upper outer member 121 includes a drawing part, or accommodating portion, 123 and the upper remaining part 124 extending from the drawing part 123. The drawing part 123 accommodates the electrode assembly 110.

The lower outer member 122 includes a finishing part 125 and the lower remaining part 126. The finishing part 125 covers the drawing part 123. The lower remaining part 126 corresponds to the upper remaining part 124 of the upper outer member 121. The upper remaining part 124 and the lower remaining part 126 are brought into contact with each other to seal the pouch type battery 100.

The drawing part 123 is formed into a shape corresponding to the shape of the electrode assembly 110. In alternative embodiments, a space may exist between the electrode assembly 110 and the drawing part depending on the method of manufacture. The drawing part 123 includes a top surface 123a having a predetermined area, and side surfaces 123b, 123c, 123d, and 123e extending from the top surface 123a. The depth of the drawing part 123 is determined by the side surfaces 123b, 123c, 123d, and 123e. In the following description, a side of the pouch type battery 100 from which the positive and negative electrode tabs 114 and 115 protrude will be referred to as a front surface 123b. Sides of the upper and lower outer members 121 and 122 that are bonded together will be referred to as a rear surface 123e. Remaining parts are not formed at the rear surface 123e. The other side surfaces except for the front surface 123b and the rear surface 123e will be referred to as a first side surface 123c and a second side surface 123d.

The upper remaining part 124 includes a first remaining part 124a extending from the front surface 123b, a second remaining part 124b extending from the first side surface 123c, and a third remaining part 124c extending from the second side surface 123d.

Corners 127 are formed on both sides of the front surface 123b of the upper remaining part 124. The corners 127 facing the protective circuit module 130 may be diagonally cut. The second remaining part 124b and the third remaining part 124c are folded and brought into contact with the first side surface 123c and the second side surface 123d, respectively. The heights of the folded second and third remaining parts 124b and 124c may be equal to or less than the heights of the first and second side surfaces 123c and 123d.

The top surface 123a includes stepped parts 128. The top surface 123a has an area corresponding to the size of the electrode assembly 110 accommodated in the drawing part 123.

The stepped parts 128 are disposed at both sides of the top surface 123a. The insulation tapes 140 are attached to the stepped parts 128, respectively. The stepped parts 128 are formed by a pressing process. A depth (A) formed by the pressing process is substantially equal to the thickness of the insulation tapes 140. Therefore, the top surface 123a may be level with the insulation tapes 140 after the insulation tapes 140 are attached to the stepped parts 128.

The protective circuit module 130 includes a protective circuit board. A plurality of semiconductor devices are disposed on the protective circuit board to detect overcharging, overdischarging, and short circuit of the pouch type battery 100. The protective circuit module 130 includes unexplained electrode terminal 131 for charge and discharge.

The protective circuit module 130 is electrically connected to the positive electrode tab 114 and the negative electrode tab 115. The protective circuit module 130 may be easily erected at the front side of the outer member 120 (pouch) by bending the positive and negative electrode tabs 114 and 115 in an L or U shape.

When the protective circuit module 130 is erected, the height of the protective circuit module 130 may be equal to or less than the lateral height of the drawing part 123.

Each of the insulation tapes 140 includes an insulation part 141 and an adhesive part 142.

The insulation part 141 is formed of a heat-resistant and chemical-resistant material. For example, the insulation part 141 may be formed of a material selected from the group consisting of a polyethylene film, an epoxy film, a polyimide film, a Teflon film, a polyvinyl chloride film, a polyester film, an acetate film, a filament film, an asbestos film, a paper film, and a polypropylene film.

The adhesive part 142 is formed on a side of the insulation part 141. The adhesive part 142 may include one of an acryl-based adhesive, a silicon-based adhesive, and a rubber-based adhesive.

The insulation tapes 140 are attached in a reverse L shape. The thickness of the insulation tapes 140 may be about 50 µm or less. The length of the insulation tapes 140 may correspond to the length of the edge parts (B) of the second remaining part 124b and the third remaining part 124c.

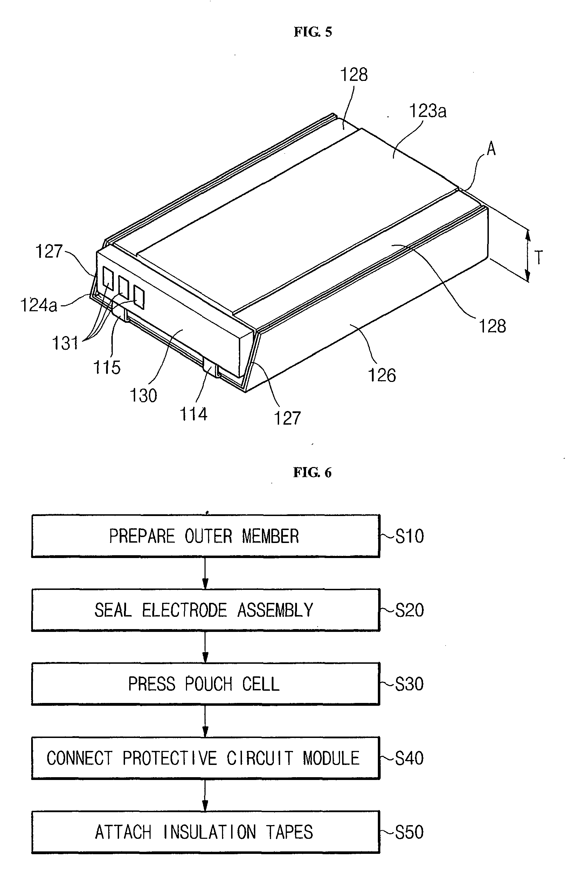

FIG. 6 is a flowchart for explaining a method of manufacturing a pouch type battery 100 according to an embodiment.

The pouch type battery manufacturing method of the current embodiment includes: an operation S10 of preparing an outer member 120; an operation S20 of accommodating and sealing an electrode assembly 110 including positive and negative electrode tabs 114 and 115 in the outer member 120; an operation S30 of pressing both sides of a top surface 123a of a drawing part 123 of the sealed outer member 120 to form recesses heaving a depth corresponding to the thickness of insulation tapes 140; an operation S40 of connecting a protective circuit module 130 to the positive and negative electrode tabs 114 and 115; and an operation S50 of attaching the insulation tapes 140 to both the pressed sides of the top surface 123a of the drawing part 123 of the outer member 120.

In the pouch type battery manufacturing method of the current embodiment, after performing the operation S20 of accommodating and sealing the electrode assembly 110 in the outer member 120, the operation S40 of connecting the protective circuit module 130 to the positive and negative electrode tabs 114 and 115, the operation S30 of pressing both sides of the top surface 123a of the drawing part 123 to form recesses heaving a depth corresponding to the thickness of the insulation tapes 140, and the operation S50 of attaching the insulation tapes 140 to both the pressed sides of the top surface 123a may be sequentially performed.

In the outer member preparing operation S10, the outer member 120 is prepared, which includes an upper outer member 121 and a lower outer member 122 that can be folded. The upper outer member 121 includes the drawing part 123 and an upper remaining part 124 extending from the drawing part 123. The drawing part 123 accommodates the electrode assembly 110. The lower outer member 122 includes a finishing part 125 and a lower remaining part 126. The finishing part 125 covers the drawing part 123.

In the sealing operation S20, the electrode assembly 110 is accommodated in the drawing part 123, and the upper remaining part 124 of the upper outer member 121 and the lower remaining part 126 of the lower outer member 122 are brought into contact with each other and are sealed. A second remaining part 124b and a third remaining part 124c of the upper remaining part 124 are folded and brought into contact with a first side surface 123c and a second side surface 123d of the drawing part 123, respectively. At this time, metal thin films 120a are exposed along edge parts (B) of the second remaining part 124b and the third remaining part 124c.

In the pressing operation S30, both sides of the top surface 123a are pressed to a depth corresponding to the thickness of the insulation tapes 140. By this, stepped parts 128 are formed. The insulation tapes 140 are attached to the stepped parts 128, respectively. A width (W) of an area to which the insulation tape 140 is attached may include the width of the stepped part 128 and the thickness of the folded second remaining part 124b. For example, the width (W) may be about 4 mm to about 5 mm from a lateral edge of the top surface 123a of the drawing part 123.

The pressing operation S30 may be performed before or after the wings 124, 126 are folded against the pouch body. The wings may therefore be the same height as or shorter than the depth of the pouch when folded, or may extend beyond a top surface of the pouch but then be reduced in height during the pressing operation.

In the protective circuit module connecting operation S40, the protective circuit module 130 is connected to the positive electrode tab 114 and the negative electrode tab 115. The protective circuit module connecting operation S40 includes an operation of bending the positive electrode tab 114 and the negative electrode tab 115 in an L or U shape.

In the insulation tape attaching operation S50, the insulation tapes 140 are attached to both sides of the top surface 123a. At this time, the insulation tapes 140 are attached in a manner such that the metal thin films 120a exposed along the edge parts (B) of the second remaining part 124b and the third remaining part 124c are covered with the insulation tapes 140. Each of the insulation tapes 140 includes an adhesive part 142. In the operation S50, first, the insulation tape 140 is placed toward the stepped part 128. Then, the adhesive part 142 is attached to the stepped part 128. The insulation tapes 140 may be attached in a manner such that the folded second and third remaining parts 124b and 124c are entirely covered with the insulation tapes 140. Although the folded second and third remaining parts 124b and 124c are lower than the drawing part 123, the insulation tapes 140 are attached to cover the folded second and third remaining parts 124b and 124c. That is, the insulation tapes 140 may be attached to the entire lateral surfaces, or sides, of the pouch type battery 100. If a thickness (T) of the pouch type battery 100 is about 2.7 mm, the insulation tapes 140 may be attached along the side surface extending at least 2 mm from the top surface 123a of the drawing part 123.

A pouch type battery will now be described according to another embodiment.

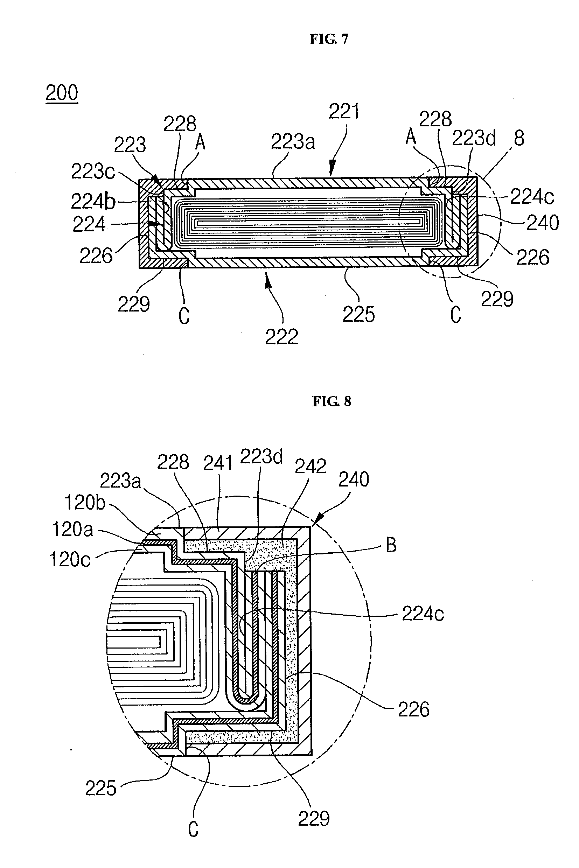

FIG. 7 is a sectional view illustrating a pouch type battery 200 according to another embodiment. FIG. 7 corresponds to FIG. 2. FIG. 8 is an enlarged sectional view illustrating portion (8) of FIG. 7.

The pouch type battery 200 of the current embodiment includes an electrode assembly 110, an outer member 220, a protective circuit module 130, and insulation tapes 240. Elements such as the electrode assembly 110 and the protective circuit module 130 of the current embodiment are the same as those of the previous embodiment explained with reference to FIGS. 1 through 5. The same elements are denoted by the same reference numerals, and detailed descriptions thereof are not repeated.

In the pouch type battery 200 of the current embodiment, the insulation tapes 240 have a C-shape as shown in FIGS. 7 and 8. The insulation tapes 240 are attached to both sides of the pouch type battery 200 in a manner such that the insulation tapes 240 cover upper and lower regions of both sides of the pouch type battery 200.

Both sides of a top surface 223a of a drawing part 223, and both sides of a finishing part 225, also referred to as a closing or sealing portion, of a lower outer member 222 are pressed to form recesses having a depth corresponding to the thickness of the insulation tapes 240. The top surface 223a and the finishing part 225 may be pressed individually or at the same time. First stepped parts 228 are formed in the top surface 223a of the drawing part 223. Second stepped parts 229 are formed in the finishing part 225 of the lower outer member 222.

A pressed depth (A) of the top surface 223a and a pressed depth (C) of the finishing part 225 are equal to the thickness of the insulation tapes 240, and thus the thickness of the pouch type battery 200 is not increased although the insulation tapes 240 are attached to the top and bottom sides of the pouch type battery 200. End parts of the insulation tapes 240 are placed on the first stepped parts 228 in a manner such that folded second and third remaining parts 224b and 224c are covered by the insulation tapes 240, and then the remaining parts of the insulation tapes 240 are attached to the second stepped parts 229.

At this time, since the insulation tapes 240 are attached to the upper and lower regions of both sides of the pouch type battery 200 to cover metal thin films 120a exposed along edge parts (B) of the second and third remaining parts 224b and 224c, a short circuit may be prevented between the metal thin film 120a and an external device.

It will be understood that while it has been described that the insulating tapes are attached to top (or bottom) and side surfaces of the pouch, the precise arrangement depends on the configuration of the battery, so more generally the insulating tape(s) can be described as being attached to adjacent surfaces of the pouch.

Exemplary embodiments have been disclosed herein, and although specific terms are employed, they are used and are to be interpreted in a generic and descriptive sense only and not for purpose of limitation. Accordingly, it will be understood by those of ordinary skill in the art that various changes in form and details may be made without departing from the scope of the present invention as set out in the following claims.

## Claims

1. A pouch type battery, comprising:
an electrode assembly (110);
a pouch (120, 220) surrounding the electrode assembly; and
an insulating tape (140, 240) disposed along a longitudinal edge of the pouch and extending along first and second adjacent surfaces of the pouch, the pouch having a first recess (128, 228) that runs along the length of the first surface (123a, 223a) of the pouch to receive the insulating tape.

2. The pouch type battery of claim 1, wherein the pouch includes a first portion that forms a first side surface (123d, 223d) of the pouch and a wing (124, 126; 224, 226) that is folded back against the first portion to form an outer side surface of the pouch, wherein the insulating tape is disposed along the outer side surface of the pouch.

3. The pouch type battery of claim 2, wherein the length of the folded back portion is the same as or less than the height of the first side surface (123d, 223d).

4. The pouch type battery of any one of the preceding claims, wherein the first recess comprises first and second stepped portions (128, 228) at both sides of the battery for receiving first and second insulating tapes (140, 240).

5. The pouch type battery of any one of claims 1 to 3, further comprising a second recess (229) that runs along the length of the third surface of the pouch opposite the first surface, wherein the insulating tape (240) is arranged to be received in both the first and second recesses.

6. The pouch type battery of claim 5, wherein the first and second recesses comprise first and second stepped portions (128, 228) at both sides of the battery for receiving first and second insulating tapes (240).

7. The pouch type battery of claim 6, wherein the width of the first and second stepped portions at the first and third surfaces of the battery are the same such that the first and second insulating tapes are symmetrically disposed.

8. The pouch type battery of any one of the preceding claims, wherein the pouch (120, 220) comprises a metal thin film layer (120a) between first and second insulation layers (1120b, 120c), vvllerein the insulating tape covers the metal thin film layer exposed at an edge of the pouch.

9. The pouch type battery of any one of the preceding claims, wherein the pouch (120, 220) comprises an upper outer member (121, 221) that comprises a space for receiving the electrode assembly, the upper outer member being bonded to a lower outer member (122, 222).

10. The pouch type battery of any one of the preceding claims, further comprising a protective circuit module (130) arranged within the perimeter formed by the outer member.

11. A method of manufacturing a pouch type battery according to any one of the preceding claims, comprising:
forming an outer member (120, 220) around the electrode assembly (110) such that the outer member forms a housing that conforms to the shape of the electrode assembly and extension portions (124, 224, 126, 226) extending from the housing; and
forming a first recess (128, 228) along the length of the first surface of the ,housing to receive an insulating tape (140, 240).

12. The method of claim 11, further comprising folding the extension portions towards the housing to form a pouch; and
affixing the insulating tape (140) in the first recess and along a side of the pouch to cover the exposed end of the folded extension portions.

13. The method of claim 12, comprising folding the extension portions towards the housing before or after forming the first recess.

14. The method of claim 11, 12 or 13, comprising forming recesses on either side of the first surface of the housing to receive first and second insulating tapes (140, 240).

15. The method of claim 14, further comprising forming second recesses on both sides of a third surface of the housing opposite the first surface; and
affixing first and second insulating tapes (240) on both sides of the housing to cover the side surfaces of the housing and edge portions of the first and third surfaces of the housing.

## Patentansprüche

1. Batterie vom Taschen-Typ (pouch-type), umfassend:
eine Elektrodenanordnung (110);
eine Tasche (120, 220), welche die Elektrodenanordnung umgibt; und
ein Isolierband (140, 240), welches entlang einer Längsachse der Tasche angeordnet ist und sich entlang ersten und zweiten benachbarten Oberflächen der Tasche erstreckt, wobei die Tasche einen ersten Rücksprung (128, 228) zur Aufnahme des Isolierbandes aufweist, der entlang der Länge der ersten Oberfläche (123a, 223a) der Tasche verläuft.

2. Batterie vom Taschen-Typ nach Anspruch 1, wobei die Tasche einen ersten Abschnitt umfasst, welcher eine erste Seitenfläche (123d, 223d) der Tasche bildet, sowie einen Flügel (124, 126; 224, 226) welcher gegen den ersten Abschnitt zurückgefaltet ist, um eine äußere Seitenfläche der Tasche zu bilden, wobei das Isolierband entlang der äußeren Seitenfläche der Tasche angeordnet ist.

3. Batterie vom Taschen-Typ nach Anspruch 2, wobei die Länge des zurückgefalteten Abschnitts kleiner oder gleich der Höhe der ersten Seitenfläche (123d, 223d) ist.

4. Batterie vom Taschen-Typ nach einem der vorhergehenden Ansprüche, wobei der erste Rücksprung an beiden Seiten der Batterie erste und zweite Stufenabschnitte (128, 228) zur Aufnahme erster und zweiter Isolierbänder (140, 240) umfasst.

5. Batterie vom Taschen-Typ nach einem der Ansprüche 1 bis 3, weiterhin umfassend einen zweiten Rücksprung (229), welcher entlang der Länge der dritten Oberfläche der Tasche verläuft, welche gegenüber der ersten Oberfläche angeordnet ist, wobei das Isolierband (240) sowohl vom ersten, als auch vom zweiten Rücksprung aufgenommen wird.

6. Batterie vom Taschen-Typ nach Anspruch 5, wobei die ersten und zweiten Rücksprünge an beiden Seiten der Batterie erste und zweite Stufenabschnitte (128, 228) zur Aufnahme erster und zweiter Isolierbänder (240) umfasst.

7. Batterie vom Taschen-Typ nach Anspruch 6, wobei die Breite der ersten und zweiten Stufenabschnitte an der ersten und dritten Oberfläche der Batterie gleich sind, so dass die ersten und zweiten Isolierbänder symmetrisch angeordnet sind.

8. Batterie vom Taschen-Typ nach einem der vorhergehenden Ansprüche, wobei die Tasche (120, 220) eine metallische Dünnschicht (120a) zwischen erster und zweiter Isolierschichten (120b, 120c) umfasst, wobei das Isolierband die metallische Dünnschicht bedeckt, die an einer Kante der Tasche freiliegt.

9. Batterie vom Taschen-Typ nach einem der vorhergehenden Ansprüche, wobei die Tasche (120, 220) einen oberen äußeren Teil (121, 221) umfasst, welcher einen Raum zur Aufnahme der Elektrodenanordnung umfasst, wobei der obere äußere Teil an einen unteren äußeren Teil (122, 222) gebunden ist.

10. Batterie vom Taschen-Typ nach einem der vorhergehenden Ansprüche, weiterhin umfassend ein Schutzschaltungsmodul (130), welches innerhalb eines vom äußeren Teil gebildeten Umfangs angeordnet ist.

11. Verfahren zur Herstellung einer Batterie vom Taschen-Typ nach einem der vorhergehenden Ansprüche, umfassend:
Ausbilden eines äußeren Teils (120, 220) um die Elektrodenanordnung (110), so dass der äußere Teil ein Gehäuse bildet, welches der Form der Elektrodenanordnung entspricht, sowie von Verlängerungsabschnitten (124, 224, 126, 226), die sich vom Gehäuse erstrecken; und
Ausbilden eines ersten Rücksprungs (128, 228) zur Aufnahme eines Isolierbandes (140, 240) entlang der Länge der ersten Oberfläche des Gehäuses.

12. Verfahren nach Anspruch 11, weiterhin umfassend Falten der Verlängerungsabschnitte in Richtung des Gehäuses, um eine Tasche auszubilden; und
Befestigen des Isolierbandes (140) in dem ersten Rücksprung und entlang eine Seite der Taschen um das freiliegende Ende der gefalteten Verlängerungsabschnitte zu bedecken.

13. Verfahren nach Anspruch 12, umfassend Falten des Verlängerungsabschnittes in Richtung des Gehäuses vor oder nach dem Ausbilden des ersten Rücksprungs.

14. Verfahren nach Anspruch 11, 12 oder 13, umfassend Ausbilden von Rücksprüngen zur Aufnahme von ersten und zweiten Isolierbändern (140, 240) an jeder Seite der ersten Oberfläche des Gehäuses.

15. Verfahren nach Anspruch 14, weiterhin umfassend Ausbilden zweiter Rücksprünge an beiden Seiten einer gegenüber der ersten Oberfläche angeordneten dritten Oberfläche des Gehäuses; und
Befestigen erster und zweiter Isolierbänder (240) an beiden Seiten des Gehäuses zum Bedecken der Seitenflächen des Gehäuses sowie von Randabschnitten der ersten und dritten Oberflächen des Gehäuses.

## Revendications

1. Batterie du type sachet, comprenant :
un assemblage d'électrodes (110) ;
un sachet (120, 220) entourant l'assemblage d'électrodes ; et
un ruban isolant (142, 240) disposé le long d'un bord longitudinal du sachet et s'étendant le long de première et seconde surfaces adjacentes du sachet, le sachet comportant un premier évidement (128, 228) qui s'étend sur la longueur de la première surface (123a, 223a) du sachet pour recevoir le ruban isolant.

2. Batterie du type sachet suivant la revendication 1, dans laquelle le sachet comprend une première portion qui forme une première surface latérale (123d, 223d) du sachet et une aile (124, 126 ; 224, 226) qui est repliée contre la première portion pour former une surface latérale extérieure du sachet, le ruban isolant étant disposé le long de la surface latérale extérieure du sachet.

3. Batterie du type sachet suivant la revendication 2, dans laquelle la longueur de la portion repliée est égale ou inférieure à la hauteur de la première surface latérale (123d, 223d).

4. Batterie du type sachet suivant l'une quelconque des revendications précédentes, dans laquelle le premier évidement comprend des première et seconde portions étagées (128, 228) des deux côtés de la batterie pour recevoir des premier et second rubans isolants (140, 240).

5. Batterie du type sachet suivant l'une quelconque des revendications 1 à 3, comprenant en outre un second évidement (229) qui s'étend sur la longueur de la troisième surface du sachet à l'opposé de la première surface, le ruban isolant (240) étant disposé de façon à être reçu à la fois dans les premier et second évidements.

6. Batterie du type sachet suivant la revendication 5, dans laquelle les premier et second évidements comprennent des première et seconde portions étagées (128, 228) des deux côtés de la batterie pour recevoir des premier et second rubans isolants (240).

7. Batterie du type sachet suivant la revendication 6, dans laquelle les largeurs des première et seconde portions étagées au niveau des première et troisième surfaces de la batterie sont identiques de telle sorte que les premier et second rubans isolants soient disposés symétriquement.

8. Batterie du type sachet suivant l'une quelconque des revendications précédentes, dans laquelle le sachet (120, 220) comprend une couche en film mince métallique (120a) entre des première et seconde couches isolantes (120b, 120c), le ruban isolant couvrant la couche en film mince métallique exposée à un bord du sachet.

9. Batterie du type sachet suivant l'une quelconque des revendications précédentes, dans laquelle le sachet (120, 220) comprend un élément supérieur extérieur (121, 221) qui comprend un espace pour recevoir l'assemblage d'électrodes, l'élément supérieur extérieur étant lié à un élément inférieur extérieur (122, 222).

10. Batterie du type sachet suivant l'une quelconque des revendications précédentes, comprenant en outre un module de circuit protecteur (130) disposé à l'intérieur du périmètre formé par l'élément extérieur.

11. Procédé pour la production d'une batterie du type sachet suivant l'une quelconque des revendications précédentes, comprenant :
la formation d'un élément extérieur (120, 220) autour de l'assemblage d'électrodes (110) de telle sorte que l'élément extérieur forme un boîtier qui épouse la forme de l'assemblage d'électrodes et de portions d'extension (124, 224 ; 126, 226) s'étendant du boîtier ; et
la formation d'un premier évidement (128, 228) sur la longueur de la première surface du boîtier pour recevoir un ruban isolant (140, 240).

12. Procédé suivant la revendication 11, comprenant en outre le pliage des portions d'extension vers le boîtier pour former un sachet ; et
la fixation du ruban isolant (140) dans le premier évidement et le long d'un bord du sachet pour couvrir l'extrémité exposée des portions d'extension pliées.

13. Procédé suivant la revendication 12, comprenant le pliage des portions d'extension vers le boîtier avant ou après la formation du premier évidement.

14. Procédé suivant la revendication 11, 12 ou 13, comprenant la formation d'évidements sur chaque côté de la première surface du boîtier pour recevoir les premier et second rubans isolants (140, 240).

15. Procédé suivant la revendication 14, comprenant en outre la formation de seconds évidements sur les deux côtés d'une troisième surface du boîtier à l'opposé de la première surface ; et
la fixation de premier et second rubans isolants (240) sur les deux côtés du boîtier pour couvrir les surfaces latérales du boîter et les portions marginales des première et troisième surfaces du boîtier.
